**Europäisches Patentamt**

**European Patent Office**

**Office européen des brevets**

(19)

(11) Veröffentlichungsnummer: **0 203 123 B1**

(12) **EUROPÄISCHE PATENTSCHRIFT**
veröffentlicht nach Art. 158 Abs. 3
EPÜ

(45) Veröffentlichungstag der Patentschrift: **27.03.91**

(51) Int. Cl.5: **B23C 3/00, B23C 5/00, B28D 1/18, B28D 1/26**

(21) Anmeldenummer: **85905805.9**

(22) Anmeldetag: **07.11.85**

(86) Internationale Anmeldenummer:
**PCT/EP85/00591**

(87) Internationale Veröffentlichungsnummer:
**WO 86/02865 (22.05.86 86/11)**

(54) **RADIAL SCHLAGENDES ROLLEN-/FRÄS-BOHRWERKZEUG AUF EINEM ANGETRIEBENEN ROTIERENDEN EXZENTER DREHEND GELAGERT.**

(30) Priorität: **10.11.84 CH 5503/84**

(43) Veröffentlichungstag der Anmeldung:
**03.12.86 Patentblatt 86/49**

(45) Bekanntmachung des Hinweises auf die
Patenterteilung:
**27.03.91 Patentblatt 91/13**

(84) Benannte Vertragsstaaten:
**AT BE CH DE FR GB IT LI LU NL SE**

(56) Entgegenhaltungen:
**DE-A- 3 105 396**
**GB-A- 571 388**
**US-A- 1 744 857**
**US-A- 4 016 741**

(73) Patentinhaber: **PETERS AG**
**Jonahof**
**CH-8645 Jona(CH)**

(72) Erfinder: **BECHEM, Philip**
**Tiefendorferstrasse 87**
**W-5800 Hagen 1(DE)**
Erfinder: **LENZEN, Dieter**
**Am Lührenbach 8**
**W-5860 Letmathe(DE)**

(74) Vertreter: **Herrmann-Trentepohl, Werner,**
**Dipl.-Ing. et al**
**Schaeferstrasse 18**
**W-4690 Herne 1(DE)**

## Beschreibung

Die Erfindung betrifft eine Vorrichtung zum radialen Schlagen, Bohren und Fräsen in hartem Gestein und ähnlichem gemäß dem Oberbegriff des Anspruchs 1.

Es ist aus der US-A-17 44 857 eine Vorrichtung zur Metallbearbeitung bekannt, bei der einem Fräswerkzeug neben einer Eigenrotation eine kreisförmige Bewegung um eine Achse überlagert ist, die parallel zur Eigenrotationsachse verläuft. Zum Antrieb und zur Durchführung der Werkzeugbewegung sind zwei unabhängig voneinander arbeitende Getriebe vorgesehen.

Zunächst wird das erste Getriebe aktiviert. Eine Schnecke kämmt mit einem Zahnrad, wodurch ein weiteres Zahnrad exzentrisch in einem dritten Zahnrad umläuft. Hierdurch wird eine Spindel in Drehung versetzt, an deren Ende drehfest das Fräswerkzeug sitzt. Dieses erste Getriebe ist somit lediglich zur Erzeugung der Eigenrotation des Werkzeuges vorgesehen.

Die Spindel sitzt exzentrisch in einem Spindelträger, welcher über das zweite Getriebe in Rotation versetzt wird. Da die Spindel exzentrisch im Spindelträger sitzt, führt die Spindelachse eine Kreisbewegung aus, die der Eigenrotation der Spindel überlagert ist. Mit Hilfe des Werkzeuges wird im metallischen Werkstück eine Aussparung bzw. eine Hinterschneidung in der Aussparung hergestellt, deren Abmessungen von der Exzentrizität der Spindelachse im Spindelträger abhängt. Die Drehbewegungen des Werkzeuges bzw. der Spindel müssen dabei relativ langsam sein, da ansonsten das drehfest auf der Spindel sitzende Werkzeug bei der Kreisbewegung schnell zerstört und das Werkstück unbrauchbar gemacht wird.

Dem gegenüber geht die Erfindung aus von Rollenbohrwerkzeugen, die unwuchtig oder linear erregt mit niedrigsten Andrücken hohe Bohrfortschritte in hartem Gestein und ähnlichem erreichen. Nachteilig bei diesen Werkzeugen ist jedoch, daß unerwünschte Schwingungsprobleme auftreten. Außerdem sind diese Bohrwerkzeuge technisch sehr aufwendig und weisen eine ungünstige Energiebilanz auf.

Der Erfindung liegt daher die Aufgabe zugrunde, eine Vorrichtung der eingangs genannten Art so auszubilden, daß sie vergleichsweise einfach und robust aufgebaut ist, unerwünschte Vibrationen aber weitgehend ausgeschlossen sind.

Die Erfindung löst diese Aufgabe mit Hilfe der Merkmale des Patentanspruches 1. Weitere vorteilhafte Ausführungsformen der Erfindung sind Gegenstand der Unteransprüche.

Erfindungsgemäß wird vergleichsweise einfach und robust, mit der Möglichkeit diverser Variationen, auf jeweils einem Exzenter eine Bohrrolle, die selbständig rollend oder angetrieben sein kann, drehend gelagert. Hierbei kann die ein- oder zweiseitig gehaltene Vorrichtung ausgewuchtet oder unwuchtig sein. Die Vorrichtung kann einzeln (oder wenn zwei Vorrichtungen zu einem Twin vereinigt sind), zusammen, kontinuierlich oder intermittierend gedreht, auch Bohrlöcher und Schlitze erstellen.

Wenn die Welle rotiert, rotiert der Exzenter ebenfalls (z. B. mit 4000 Umdrehungen pro Minute). Somit schlägt die Rolle 4000 mal pro Minute. Da die Rolle auf dem Exzenter gelagert ist und mit dem innen verzahnten Zahnrad verbunden ist, welches exzentrisch auf dem außen verzahnten Zahnrad um läuft, rotiert die Rolle extrem langsam (z. B. mit 200 Umdrehungen pro Minute). Somit wirken die Zahnräder wie ein Untersetzungsgetriebe. Die Schlagbewegung der Rolle ist durch eine langsame Mahlbewegung überlagert. Falls erforderlich, werden die Schläge noch überlagert bzw. verstärkt durch Unwucht- oder sonstige Schlagimpulse. Hierzu wird insbesondere der schnellaufende Exzenter zur Erhöhung des Gegenmomentes bzw. der Schlagkraft mit zusätzlicher Schwung-/Wuchtmasse versehen. Hierzu kann im Exzenter ein Hohlraum vorgesehen sein, der z.B. mit einer Flüssigkeit verfüllbar ist.

Bei einer vorteilhaften Ausführungsform der Erfindung ist vorgesehen, zwei Rollen parallel nebeneinander anzuordnen, die jeweils auf einem Exzenter gelagert sind. Die Rollen haben jeweils einen separaten exentrischen Antrieb oder eine Antriebswelle, wobei sie unwuchtig oder ausgewuchtet arbeiten und zwar in der gleichen Richtung oder in unterschiedlichen Drehrichtungen. Dabei können die beiden Rollen jeweils einen eigenen Antrieb haben. Sie können jedoch auch mit Hilfe z. B. eines Doppelkurbelzapfens miteinander verbunden sein.

Im folgenden wird die Erfindung anhand von Zeichnungen dargestellt und näher erläutert. Es zeigen

Fig. 1    schematische Darstellung der Erfindung in einem ersten Ausführungsbeispiel und

Fig. 2    schematische Darstellung der Erfindung in einer abgewandelten Ausführungsform (Twin).

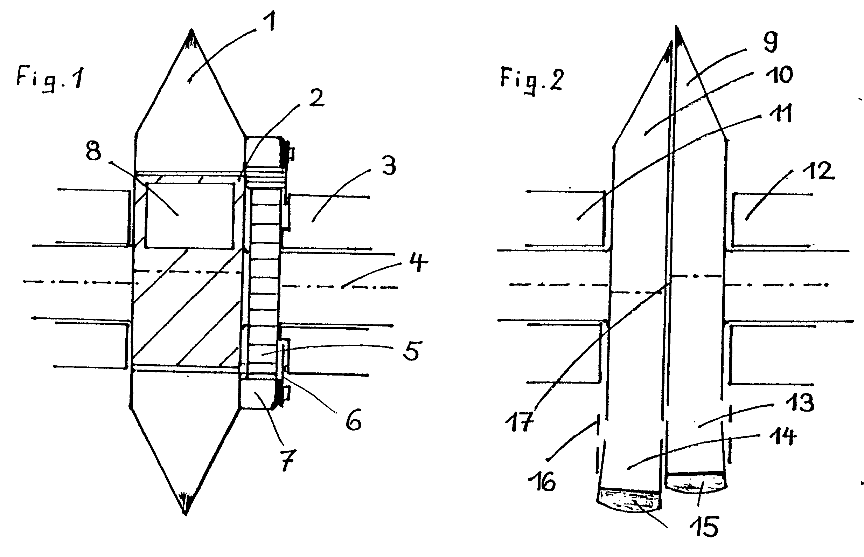

In der Fig. 1 bezeichnet das Bezugszeichen 1 eine in radialer Richtung schwingende und rotierende Bohr- und Schneidrolle. Die Rolle 1 ist drehbar auf einem Exzenter 2 montiert, welcher von einer geeigneten Antriebsquelle wie einem Motor durch die Welle 4 angetrieben wird, welche von einem stationären Gehäuse 3 umgeben ist. Ein inneres Zahnrad 5 ist am Gehäuse befestigt und bleibt stationär mit dem Gehäuse. Das innere Zahnrad 5 ist konzentrisch zur Welle 4 angeordnet und weist eine äußere Verzahnung auf, welche mit der Innenverzahnung eines größeren Ringzahnrades 7 kämmt. Zum Schutz der Zahnräder ist eine Dichtungsscheibe 6 mit einer Dichtlippe vorgesehen. Das Ringzahnrad 7 ist an der Rolle 1 befestigt, wobei die beiden simultan rotieren. Der Innendurchmesser des Ringzahnrades 7 ist größer als der Außendurchmesser des inneren Zahnrades 5. Der Exzenter 2 ist mit einem Hohlraum 8 versehen, der als Gewichtsausgleich zum ausgewuchteten Rotieren z. B. mit einer Unwuchtmasse verfüllbar ist. In der Fig. 2 sind mit 9 und 10 die auf nicht dargestellten Exzentern drehend gelagerten Bohrrollen bezeichnet, wobei die Bohrrollen 9 und 10 jeweils einen eigenen Exzenterantrieb aufweisen, die entweder in gleicher Drehrichtung oder gegenläufig arbeiten. Mit 11 und 12 sind Halterungen bzw. Lagerungen bezeichnet, die entweder starr miteinander verbunden sind, oder aber gemeinsam oder einzeln elastisch bzw. gefedert gehalten sein können. Im oberen Teil der Fig. 2 sind Rollenbohrwerkzeuge dargestellt, die mit spitz zulaufenden Schneiden versehen sind. Im unteren Teil der Fig. 2 sind die mit 15 bezeichneten Rollenwerkzeuge breiter ausgebildet. Diese Werkzeuge 15 sind zum freien Schneiden (siehe 16) geeignet. Sie können einen gemeinsamen Schlitz beliebiger Tiefe in Abhängigkeit des Bohrrollendurchmessers oder zwei getrennte Schlitze mit gesondert abzutragenden stehenbleibenden Steg schneiden. Bei starrer Verbindung der beiden Halterungen 11 und 12 können die beiden Exzenter bei gleicher Drehrichtung und gleicher Drehzahl mit Hilfe eines Doppelkurbelzapfens 17 verbunden sein. Es können jedoch auch Verschraubungen vorgesehen sein oder zwei oder mehr Exzenter aus einem Stück, die ausgewuchtet sind. Eine weitere Alternative liegt darin, eine Exzenterwelle zur Durchführung des Antriebs zum anderen Exzenter hohl auszubilden. Hierzu können Lagerungen vorgesehen sein, um einen einseitigen Antrieb, ggf. mit einseitiger Lagerung bzw. Halterung zu ermöglichen.

Die Arbeitsweise der Vorrichtung gemäß Fig. 1 ist folgende: Wenn die Welle 4 rotiert, rotiert der Exzenter 2 ebenfalls (z. B. mit 4000 Umdrehungen pro Minute). Somit schlägt die Rolle 1 4000 mal in der Minute. Da die Rolle auf dem Exzenter gelagert ist und mit dem innen verzahnten Zahnrad 7 verbunden ist, welches exzentrisch auf dem außen verzahnten Zahnrad 5 umläuft, rotiert die Rolle 1 extrem langsam (z. B. mit 200 Umdrehungen pro Minute). Somit wirken die Zahnräder 7 und 5 wie ein Untersetzungsgetriebe. Die Schlagbewegung der Rolle 1 ist durch eine langsame Mahlbewegung überlagert. Die Zahnräder können dabei alternativ entweder als Freilauf oder als Ratsche fungieren, um das Mitlaufen der Bohrrollen in Drehrichtung der Exzenter zu verhindern.

## Ansprüche

1. Vorrichtung zum radialen Schlagen, Bohren und Fräsen in hartem Gestein oder ähnlichem mit Hilfe von wenigstens einer angetriebenen Rolle (1), welche auf ihrem Umfang mit Werkzeugen versehen ist, wobei der Rolle (1) neben einer Eigenrotation eine in etwa kreisförmige Bewegung um eine zur Eigenrotationsachse parallele Achse aufgeprägt wird, dadurch gekennzeichnet, daß die Rolle (1) auf einem Exzenter (2) frei drehbar gelagert ist, welcher seinerseits drehfest auf einer Welle (4) angeordnet ist, die stationär in einem Gehäuse (3) gelagert ist, wobei zur Übertragung des Fräsantriebs auf die Rolle (1) ein innen verzahntes Zahnrad (7) vorgesehen ist, in dem ein außen verzahntes, kleineres Zahnrad (5) relativ zum Zahnrad (7) exzentrisch umläuft und wobei eines der Zahnräder (5, 7) drehfest am Gehäuse (3) und das andere Zahnrad (5, 7) drehfest an der Rolle (1) angeordnet ist.

2. Vorrichtung nach Anspruch 1, dadurch gekennzeichnet, daß das innen verzahnte Zahnrad (7) an der Rolle (1) und das außen verzahnte Zahnrad (5) am Gehäuse (3) befestigt ist.

3. Vorrichtung nach Anspruch 1 oder 2, dadurch gekennzeichnet, daß die beiden Zahnräder (5, 7) als Freilauf ausgebildet sind.

4. Vorrichtung nach Anspruch 1 oder 2, dadurch gekennzeichnet, daß die beiden Zahnräder (5, 7) als Ratsche ausgebildet sind.

5. Vorrichtung nach einem der Ansprüche 1 bis 4, dadurch gekennzeichnet, daß der Exzenter (2) mit Mitteln (8) zum Auswuchten versehen ist.

6. Vorrichtung nach Anspruch 5, dadurch gekennzeichnet, daß ein Hohlraum (8) zur Aufnahme einer Unwuchtmasse im Exzenter (2) vorgesehen ist.

7. Vorrichtung nach einem der Ansprüche 1 bis 6, dadurch gekennzeichnet, daß zwei Rollen parallel Seite an Seite angeordnet sind und die Exzenter (2), auf denen die Rollen angeordnet sind, relativ zueinander um 180 Grad versetzt sind und in eine synchrone Rotation in gleicher Richtung versetzbar sind.

8. Vorrichtung nach einem der Ansprüche 1 bis 6, dadurch gekennzeichnet, daß die beiden Rollen (1) parallel Seite an Seite angeordnet sind und die Exzenter (2), auf denen die Rollen angeordnet sind, relativ zueinander um 180 Grad versetzt sind und in eine synchrone Rotation in entgegengesetzten Richtungen versetzbar sind.

9. Vorrichtung nach Anspruch 7 oder 8, dadurch gekennzeichnet, daß jede Rolle (1) jeweils mit Hilfe der Zahnräder (5, 7) antreibbar ist.

10. Vorrichtung nach den Ansprüchen 7 oder 8, dadurch gekennzeichnet, daß eine der Rollen (1) mit Hilfe der Zahnräder (5, 7) antreibbar ist, während der Exzenter (2) der anderen Rolle (1) mit dem Exzenter der ersten Rolle durch einen Doppelkurbelzapfen (17) verbunden ist.

11. Vorrichtung nach einem der Ansprüche 7 bis 10, dadurch gekennzeichnet, daß die Gehäuse (3), die den Rollen (1) zugeordnet sind, fest miteinander verbunden sind.

12. Vorrichtung nach einem der Ansprüche 1 bis 11, gekennzeichnet durch eine elastische, federunterstützte Lagerung.

13. Vorrichtung nach einem der Ansprüche 1 bis 12, dadurch gekennzeichnet, daß die auf dem Umfang der Rollen (1) angeordneten Werkzeuge auswechselbar sind.

## Claims

1. A device for radial boring, drilling and milling in hard rock or the like with the aid of at least one driven roller (1) which is provided on its circumference with tools wherein an approximately circular motion about an axis parallel to the axis of auto-rotation is superposed on the roller (1) together with an auto-rotation, characterised in that the roller (1) is freely rotatably mounted on an eccentric (2) which for its part is arranged non-rotatably on a shaft (4) which is stationarily mounted in a housing (3) wherein, in order to transfer the milling drive to the roller (1) an internally toothed cog wheel (7) is provided within which an externally toothed, smaller cog wheel (5) rotates eccentrically relative to the cog wheel (7) and wherein one of the cog wheels (5, 7) is arranged non-rotatably on the housing (3) and the other cog wheel (5, 7) is arranged non-rotatably on the roller (1).

2. A device according to Claim 1, characterised in that the internally toothed cog wheel (7) is fixed to the roller (1) and the externally toothed cog wheel (5) is fixed to the housing (3).

3. A device according to Claim 1 or 2, characterised in that the two cog wheels (5, 7) are designed to be free-running.

4. A device according to Claim 1 or 2, characterised in that the two cog wheels (5, 7) are formed as ratchets.

5. A device according to one of Claims 1 to 4, characterised in that the eccentric (2) is provided with means (8) for balancing.

6. A device according to Claim 5, characterised in that a hollow space (8) is provided to receive an eccentric mass in the eccentric (2).

7. A device according to one of Claims 1 to 6, characterised in that two rollers are arranged in parallel side by side and the eccentrics (2) on which the rollers are arranged are offset relative to one another by 180 degrees and are rotatable synchronously in the same direction.

8. A device according to one of Claims 1 to 6, characterised in that two rollers (1) are arranged in parallel side by side and the eccentrics (2) on which the rollers are arranged are offset relative to one another by 180 degrees and are rotatable synchronously in opposite directions.

9. A device according to Claim 7 or 8, characterised in that each roller (1) is drivable with the aid of the cog wheels (5, 7).

10. A device according to Claim 7 or 8, characterised in that one of the rollers (1) is drivable with the aid of the cog wheels (5, 7) whilst the eccentric (2) of the other roller (1) is connected to the eccentric of the first roller by means of a double crank pin (17).

11. A device according to one of Claims 7 to 10, characterised in that the housings (3) in which the rollers (1) are arranged are rigidly fixed to one another.

12. A device according to one of Claims 1 to 11, characterised by an elastic, spring-assisted mounting.

13. A device according to one of Claims 1 to 12, characterised in that the tools are arranged on the periphery of the rollers (1) are exchangeable.

## Revendications

1. Dispositif pour assurer un effet de percussion radiale, de forage et de fraisage dans une roche dure ou analogue, au moyen d'au moins un galet (1) entraîné par un organe moteur et comportant sur sa périphérie des outils d'attaque, ce galet (1) étant soumis, outre sa rotation propre, à un mouvement de révolution sensiblement circulaire suivant un axe parallèle à son axe de rotation, caractérisé en ce que le galet (1) est monté libre en rotation sur un excentrique (2) lui-même calé sur un arbre (4) monté sur des paliers fixés à un carter (3), le mouvement de fraisage du galet (1) étant assuré par une couronne à denture intérieure (7) dans laquelle une roue dentée (5) de plus petit diamètre et à denture externe effectue un mouvement tournant excentré par rapport à la couronne dentée (7), l'une des roues dentées (5,7) étant solidaire en rotation du carter (3) alors que l'autre roue dentée (5,7) est solidaire en rotation du galet (1).

2. Dispositif selon la revendication 1, caractérisé en ce que la couronne à denture interne (7) est fixée au galet (1), alors que l'autre roue dentée (5), à denture externe, est fixée au carter (3).

3. Dispositif selon la revendication 1 ou 2, caractérisé en ce que les deux roues dentées (5,7) sont montées folles en rotation.

4. Dispositif selon la revendication 1 ou 2, caractérisé en ce que les deux roues dentées (5,7) sont associées à un cliquet autorisant un seul sens de rotation.

5. Dispositif selon l'une des revendications 1 à 4, caractérisé en ce que l'excentrique (2) comporte des moyens (8) assurant un effet de balourd.

6. Dispositif selon la revendication 5, caractérisé en ce que l'excentrique (2) comporte une cavité (8) pour recevoir une masse de déséquilibrage.

7. Dispositif selon l'une des revendications 1 à 6, caractérisé en ce qu'il comporte deux galets montés parallèlement côte à côte, et en ce que les excentriques (2) auxquels sont associés les galets sont montés avec un décalage relatif de 180 degrés, et prévus pour être entraînés en rotation synchrone dans le même sens.

8. Dispositif selon l'une des revendications 1 à 6, caractérisé en ce que les deux galets (1) sont disposés parallèlement côte à côte, et en ce que les excentriques (2) sur lesquels sont disposés les galets sont montés avec un décalage relatif de 180 degrés, et prévus pour être entraînés en rotation synchrone en sens opposés.

9. Dispositif selon la revendication 7 ou 8, caractérisé en ce que chaque galet (1) est prévu pour être entraîné séparément au moyen des roues dentées (5,7).

10. Dispositif selon la revendication 7 ou 8, caractérisé en ce que l'un des galets (1) est prévu pour être entraîné au moyen des roues dentées (5,7), tandis que l'excentrique (2) de l'autre galet (1) est relié à l'excentrique du premier galet par un arbre à double vilebrequin (17).

11. Dispositif selon l'une des revendications 7 à 10, caractérisé en ce que les carters(3) auxquels sont associés les galets (1) sont rigidement reliés l'un à l'autre.

12. Dispositif selon l'une des revendications 1 à 11, caractérisé en ce qu'il comporte des paliers élastiques, montés sur ressorts.

13. Dispositif selon l'une des revendications 1 à 12, caractérisé en ce que les outils d'attaque montés à la périphérie des galets (1) sont interchangeables.

Fig.1

Fig.2

EP 0 203 123 B1